# EUROPEAN PATENT SPECIFICATION

(11) **EP 2 931 580 B1**
(45) Date of publication and mention of the grant of the patent: **30.03.2022**
(21) Application number: 13864549.4
(22) Date of filing: 02.12.2013
(51) Int. Cl.: B60W 30/182, B60W 50/08, B60W 30/188, B60W 50/14

(54) **METHOD AND SYSTEM FOR CONTROLLING THE DRIVING OF A VEHICLE**
VERFAHREN UND SYSTEM ZUR STEUERUNG DES FAHRBETRIEBES EINES FAHRZEUGES
PROCÉDÉ ET SYSTÈME DE COMMANDE DE LA CONDUITE D'UN VÉHICULE

(30) Priority: 17.12.2012 SE 1251430
(43) Date of publication of application: 21.10.2015
(73) Proprietor: Scania CV AB, 151 87 Södertälje (SE)
(72) Inventor: BREDBERG, Linus, S-146 34 Tullinge (SE); LARSSON, Olof, S-127 43 Skärholmen (SE)
(74) Representative: Scania CV AB
(86) International application number: PCT/SE2013/051426
(87) International publication number: WO 2014/098718

(56) References cited:
- EP-A1- 1 355 209
- DE-A1-102009 041 201
- DE-A1-102009 041 201
- GB-A- 2 492 655
- US-A1- 2002 013 650
- US-A1- 2007 112 500
- US-A1- 2008 097 674
- US-A1- 2012 203 426
- US-A1- 2012 316 699
- US-A1- 2012 316 699

## Description

### TECHNICAL FIELD

The invention relates to a method for controlling the driving of a vehicle according to the preamble of claim 1. The invention relates to a system for controlling the driving of a vehicle according to the preamble of claim 8. The invention relates also to a motor vehicle. The invention also relates to a computer readable medium and a computer programme product.

### BACKGROUND

Certain vehicles such as road freight vehicles are provided with different vehicle modes, comprising performance mode in which operability is given priority and fuel economy is subordinate, and economy mode in which priority is given to economical operation. Such systems are known for example from US2012316699.

Performance mode whereby operability is prioritised over fuel economy works for example well in forest road driving but is less appropriate from a fuel economy perspective in national highway and motorway driving.

One problem is for example that haulage of timber often starts in arduous offroad conditions where performance mode is suitable because operability is central, but often moves on to a national highway or motorway, and if the driver forgets to select economy mode with a view to economical operation the vehicle's fuel economy will be impaired.

### OBJECTS OF THE INVENTION

One object of the present invention is to propose a method for controlling the driving of a vehicle which makes it possible to optimise fuel consumption without hampering operability.

One object of the present invention is to propose a system for controlling the driving of a vehicle which makes it possible to optimise fuel consumption without hampering operability.

### SUMMARY OF THE INVENTION

These and other objects indicated by the description set out below are achieved by a method, a system, a motor vehicle and a computer programme and a computer programme product of the kinds indicated in the introduction which further present the features indicated in the characterising parts of the attached independent claims 1, 8, 15, 16 and 17. Preferred embodiments of the method and the system are defined in the attached dependent claims 2-7 and 9-14.

The invention achieves the objects with a method for controlling the driving of a vehicle, vehicle which can be run in at least one mode focused on operability and at least one mode focused on economical operation and be switched between said modes, which method comprises the steps of continually determining a torque outtake pattern over a given period of time, of determining the proportion of said period during which the vehicle runs with a torque outtake which is either above a predetermined value or below a predetermined value, and of using said proportion as a basis for deciding whether the current mode is the most appropriate. Information thus obtained makes it possible to optimise the driving of the vehicle by continually being able to run it in the mode most appropriate to prevailing circumstances. Optimisation of fuel consumption is thus made possible without hampering operability.

In one embodiment the method further comprises the step of suggesting that the driver of the vehicle change mode if the current mode is not judged to be the most appropriate. This results in the driver being made aware that a change of mode might be appropriate and in consequent minimisation of the risk of a change of mode being missed through driver oversight. It also makes it possible for the driver to assess for him/herself whether the proposed change of mode is correct and to choose whether to change mode or refrain from doing so.

In one embodiment the method further comprises the step of automatically changing mode if the current mode is judged to be not the most appropriate, thus ensuring that the vehicle will run in the most appropriate mode.

In one embodiment the method further comprises the steps of continually determining the vehicle's average speed over said given period of time, and whether said average speed is above a predetermined value. Suitable information is thus obtained for determining whether change of mode is appropriate and whether a suggestion for change of mode should be presented for the driver.

In one embodiment the method further comprises the steps of continually determining the vehicle's current speed and whether it is above a predetermined value. Suitable information is thus obtained for determining whether change of mode is appropriate and whether a suggestion for change of mode should be presented for the driver.

In one embodiment the method further comprises the step of continually determining whether the vehicle is running with a torque outtake which is above said predetermined value. Suitable information is thus obtained for determining whether change of mode is appropriate and whether a suggestion for change of mode should be presented for the driver.

In one embodiment of the method no change of mode is suggested if said average speed is not above said predetermined value and/or said current speed is not above said predetermined value and/or the vehicle is running with a torque outtake which is above said predetermined value. Presentation of a suggestion for change of mode is thus prevented if change of mode is not appropriate.

The invention achieves the objects with a system for controlling the driving of a vehicle, which vehicle can be run in at least one mode focused on operability and at least one mode focused on economical operation and be switched between said modes, which system comprises means for continually determining a torque outtake pattern over a given period of time, means for determining the proportion of said period during which the vehicle runs with a torque outtake which is either above a predetermined value or below a predetermined value, and means for using said proportion as a basis for deciding whether the current mode is the most appropriate. Information thus obtained makes it possible to optimise the driving of the vehicle by continually being able to run it in the mode most appropriate to prevailing circumstances. Optimisation of fuel consumption is thus made possible without hampering operability.

In one embodiment the system further comprises means for suggesting that the driver of the vehicle change mode if the current mode is not judged to be the most appropriate. This results in the driver being made aware that a change of mode might be appropriate and in consequent minimisation of the risk of a change of mode being missed through driver oversight. It also makes it possible for the driver to assess for him/herself whether the proposed change of mode is correct and to choose whether to change mode or refrain from doing so.

In one embodiment the system further comprises means for automatically changing mode if the current mode is judged to be not the most appropriate., thus ensuring that the vehicle will run in the most appropriate mode.

In one embodiment the system further comprises means for continually determining the vehicle's average speed over said given period of time, and means for determining whether said average speed is above a predetermined value. Suitable information is thus obtained for determining whether change of mode is appropriate and whether a suggestion for change of mode should be presented for the driver.

In one embodiment the system further comprises means for continually determining the vehicle's current speed and means for determining whether it is above a predetermined value. Suitable information is thus obtained for determining whether change of mode is appropriate and whether a suggestion for change of mode should be presented for the driver.

In one embodiment the system further comprises means for continually determining whether the vehicle is running with a torque outtake which is above said predetermined value. Suitable information is thus obtained for determining whether change of mode is appropriate and whether a suggestion for change of mode should be presented for the driver.

In one embodiment of the system no change of mode is suggested if said average speed is not above said predetermined value and/or said current speed is not above said predetermined value and/or the vehicle is running with a torque outtake which is above said predetermined value. Presentation of a suggestion for change of mode is thus prevented if change of mode is not appropriate.

### DESCRIPTION OF DRAWINGS

The present invention will be better understood by reading the detailed description set out below in conjunction with the attached drawings, in which the same reference notations are used for similar items throughout the various views, and
Fig. 1 schematically illustrates a motor vehicle according to an embodiment of the present invention,
Fig. 2 schematically illustrates a system for controlling the driving of a vehicle according to an embodiment of the present invention,
Fig. 3 schematically illustrates a torque outtake pattern during vehicle driving over a period of time according to an embodiment of the present invention,
Fig. 4 is a schematic block diagram of a method for controlling the driving of a vehicle according to an embodiment of the present invention, and
Fig. 5 schematically illustrates a computer according to an embodiment of the present invention.

### DESCRIPTION OF EMBODIMENTS

The term "link" refers herein to a communication link which may be a physical connection such as an opto-electronic communication line, or a non-physical connection such as a wireless connection, e.g. a radio link or microwave link.

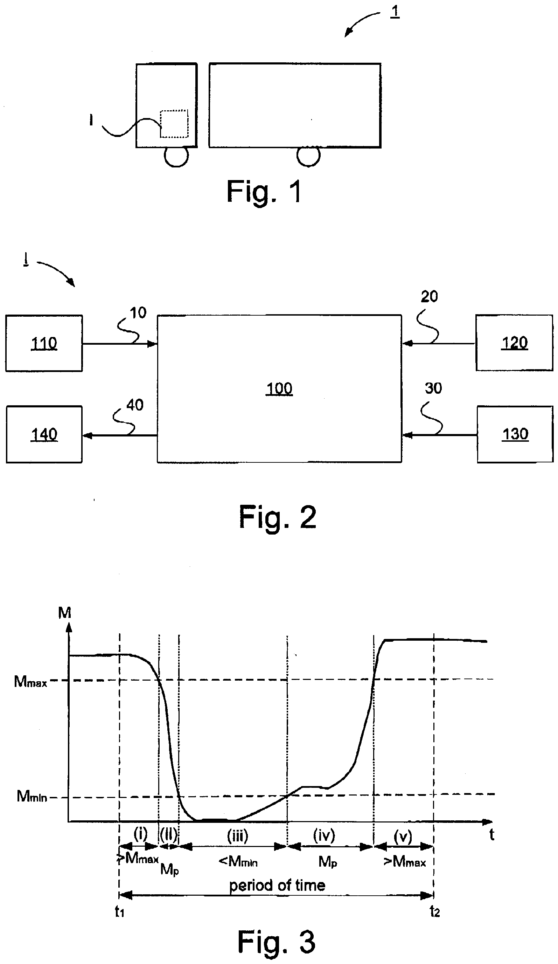

Fig. 1 illustrates schematically a motor vehicle 1 according to an embodiment of the present invention. The vehicle exemplified is a heavy vehicle in the form of a truck but might alternatively be any suitable vehicle, e.g. a bus or a car. The vehicle is provided with a system I according to the present invention.

Fig. 2 is a schematic block diagram of a system I for controlling the driving of a vehicle according to an embodiment of the present invention.

The system I comprises an electronic control unit 100 for said controlling.

The system I comprises torque determination means 110 for continually determining the vehicle's propulsive torque, i.e. the propulsive torque extracted from the vehicle's engine, in order to determine a torque outtake pattern over a given period of time. Said means 110 comprises any suitable means for determining the vehicle's propulsive torque and comprises in one variant sensor means for determining amounts of fuel injected and/or a torque meter.

The system I comprises speed determination means 120 for continually determining the vehicle's speed in order to determine its average speed over a given period of time. Said means 120 comprises in one variant speedometer means.

The system I further comprises vehicle mode determination means 130 for determining which mode the vehicle is in from among modes comprising a mode focused on operability, herein called performance mode, in which fuel economy is subordinate, and a mode focused on economical operation, herein called economy mode. Said means 130 comprises in one variant gear position monitoring means and power output monitoring means for monitoring the engine's power output, and said mode focused on operability is identified if the gear position monitoring means finds that the transmission is in a relatively lower gear position such that there is higher power output in the engine, and economy mode is identified if the gear position is suited to low fuel consumption.

The system I further comprises action suggestion presentation means 140 for presenting the driver with suggestions for action which comprises change of the vehicle's mode if the current mode is judged to be not the most appropriate. Said means 140 may comprise any suitable means for presenting suggestions for action, comprising means for visual presentation such as continual or flashing lights indicating suggested action, and/or text and/or symbols indicating suggested action, means for auditory presentation comprising alarms and/or voice presentation of suggested action, means for tactile information comprising vibrations or the like which indicate suggested action. Said means 140 comprise in one variant a vehicle display unit situated in the vehicle's instrument cluster to present said suggestions for action, i.e. suggesting change of mode if the current mode is judged to be not the most appropriate.

The electronic control unit 100 is signal-connected to said torque determination means 110 via a link 10 enabling it to receive from said means 110 a signal which represents data on propulsive torque extracted.

The electronic control unit 100 is signal-connected to said speed determination means 120 via a link 20 enabling it to receive from said means 120 a signal which represents data on the vehicle's speed.

The electronic control unit 100 is signal-connected to said vehicle mode determination means 130 via a link 30 enabling it to receive from said means 130 a signal which represents data on which mode the vehicle is in, i.e. performance mode or economy mode.

The electronic control unit 100 is signal-connected to said action suggestion presentation means 140 via a link 40 enabling it to send to said means 140 a signal which represents action suggestion data for presenting the driver with suggestions for action which comprises change of mode.

The electronic control unit 100 is adapted to processing said torque data from the torque determination means 110 in order to determine a torque outtake pattern continually over a given period of time. It is adapted to determining the proportion of said period of time during which the vehicle runs with a torque outtake which is either above a predetermined value or below a predetermined value. Fig. 3 illustrates an example of a torque outtake pattern determined over a given period of time.

The electronic control unit 100 is adapted to processing said data on which mode the vehicle is in from said vehicle mode determination means 130, to comparing with the proportion of said period of time determined as that during which the vehicle runs with a torque outtake which is either above a predetermined value or below a predetermined value, and to using said proportion as a basis for deciding whether the current mode is the most appropriate.

The electronic control unit 100 is adapted to sending to said action suggestion presentation means 140 via the link 40 a signal which represents action suggestion data for presenting the driver with suggestions for action for change of mode if the current mode is judged to be not the most appropriate.

The electronic control unit comprises in one variant means for automatic change of mode if the current mode is judged to be not the most appropriate.

The electronic control unit 100 is adapted to processing said torque data in order to determine continually whether the vehicle is running with a torque outtake which is above said predetermined value in cases where change of mode is not suggested and said action suggestion presentation means 140 is therefore not sent any signal suggesting change of mode if the vehicle is running with a torque outtake which is above said predetermined value. In the case of automatic change of mode, no change takes place if the vehicle is running with a torque outtake which is above said predetermined value.

The electronic control unit 100 is adapted to processing said speed data from the speed determination means 120 in order to determine the vehicle's average speed over a given period of time. It is adapted to determining whether said average speed is above a predetermined value in cases where change of mode is not suggested and said action suggestion presentation means 140 is therefore not sent any signal suggesting change of mode if said average speed is not above said predetermined value. In the case of automatic change of mode, no change takes place if said average speed is not above said predetermined value.

The electronic control unit 100 is adapted to processing said speed data from the speed determination means 120 in order to determine the vehicle's current speed continually over a given period of time. It is adapted to determining whether said current speed is above a predetermined value in cases where change of mode is not suggested and said action suggestion presentation means 140 is therefore not sent any signal suggesting change of mode if said current speed is not above said predetermined value. In the case of automatic change of mode, no change takes place if said current speed is not above said predetermined value.

The electronic control unit comprises in one variant means for automatic change of mode if the current mode is judged to be not the most appropriate.

Fig. 3 illustrates schematically a torque outtake pattern during driving of a vehicle over a period of time according to an embodiment of the present invention.

In the case exemplified, the vehicle travels along an itinerary and a torque outtake pattern is determined over a period between time t₁ and time t₂ by means of said electronic control unit 100 as described above in relation to Fig. 2.

The vehicle travels from time t₁ for a first part-period (i) during which it runs with a torque outtake which is above a predetermined upper value Mₘₐₓ and might represent torque outtake when travelling uphill and/or heavily laden.

The vehicle travels for a second part-period (ii) during which it runs with a torque outtake which is between said predetermined upper value Mₘₐₓ and a predetermined lower value Mₘᵢₙ such that part-period (ii) here represents a transition between Mₘₐₓ and Mₘᵢₙ, herein called torque outtake at partial load, Mₚ, and is relatively short and might be at the transition between an upgrade where maximum torque outtake is required and a downgrade where minimum torque outtake, so-called drag torque, is required.

The vehicle proceeds further during a third part-period (iii) in which it runs with a torque outtake which is below said predetermined lower value Mₘᵢₙ and might represent downhill driving.

The vehicle travels for a fourth part-period (iv) during which it runs with a torque outtake Mₚ which is between said predetermined upper value Mₘₐₓ and said predetermined lower value Mₘᵢₙ and might represent travelling on a substantially level road at above a certain speed, as on a national highway or motorway.

The vehicle travels for a fifth part-period (v) during which it runs with a torque outtake which is above said predetermined upper value Mₘₐₓ until a time t₂.

The electronic control unit 100 is adapted to determining the proportion of said period of time during which the vehicle runs with a torque outtake which is either above a predetermined value or below a predetermined value. This is achieved by the part-periods during which the torque outtake is above the upper value Mₘₐₓ, i.e. (i) and (v), and those during which the torque outtake is below the lower value Mₘᵢₙ, i.e. (iii), being added together and divided by the whole period, i.e. (i) + (ii) + (iii) + (iv) + (v). The proportion of said period during which the vehicle runs with a torque outtake which is either above said predetermined upper value Mₘₐₓ or below said predetermined lower value Mₘᵢₙ is then arrived at as a ratio Q which in the example in Fig. 3 will be Q = ((i) + (v) + (iii)) / ((i) + (ii) + (iii) + (iv) + (v)).

The period t₁-t₂ in one embodiment is of the order of two minutes.

Torque outtake at part-load in one variant is within the range of 10-80% of the maximum torque outtake.

The ratio Q between the part-periods in which the vehicle runs at above Mₘₐₓ or below Mₘᵢₙ and the total period determines accordingly whether the current mode in which the vehicle is running is the most appropriate. If Q is below a predetermined threshold value and the current mode is performance mode, this will not be deemed the most appropriate mode and a change to economy mode will be suggested to the driver via said action suggestion presentation means 140, subject to maintaining a certain average speed which is above a predetermined level.

Said threshold value in one variant is within the range 0-30%.

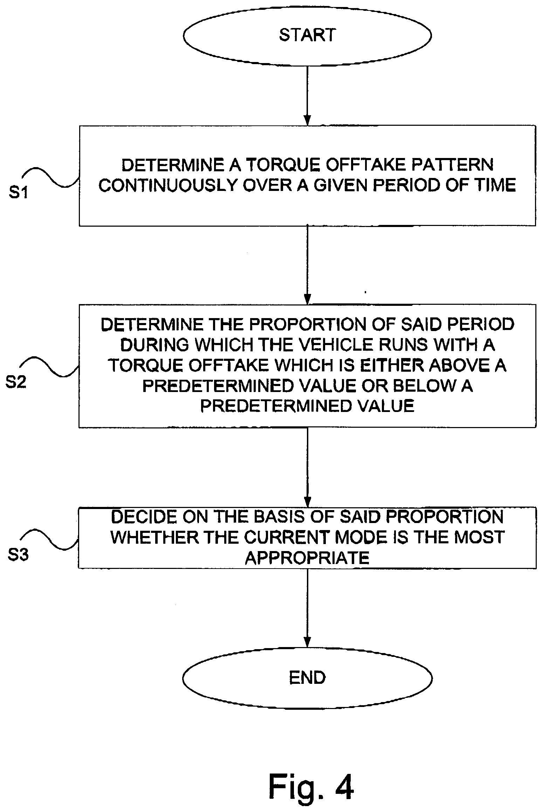

Fig. 4 is a schematic block diagram of a method for controlling the driving of a vehicle according to an embodiment of the present invention.

In one embodiment the method for controlling the driving of a vehicle comprises a first step S1 of determining a torque outtake pattern continually over a given period of time.

In one embodiment the method for controlling the driving of a vehicle comprises a second step S2 of determining the proportion of said period during which the vehicle runs with a torque outtake which is either above a predetermined value or below a predetermined value.

In one embodiment the method for controlling the driving of a vehicle comprises a third step S3 of deciding on the basis of said proportion whether the current mode is the most appropriate.

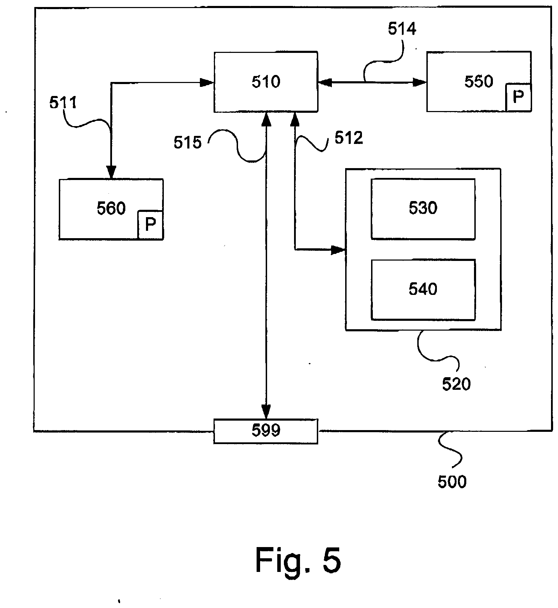

Fig. 5 is a diagram of one version of a device 500. The control unit 100 described with reference to Figure 2 may in one version comprise the device 500. The device 500 comprises a non-volatile memory 520, a data processing unit 510 and a read/write memory 550. The non-volatile memory has a first memory element 530 in which a computer programme, e.g. an operating system, is stored for controlling the function of the device 500. The device 500 further comprises a bus controller, a serial communication port, I/O means, an A/D converter, a time and date input and transfer unit, an event counter and an interruption controller (not depicted). The non-volatile memory has also a second memory element 540.

A proposed computer programme P comprises routines for controlling the driving of a vehicle according to the innovative method. The programme comprises routines for determining a torque outtake pattern continually over a given period of time. It comprises routines for determining the proportion of said period during which the vehicle runs with a torque outtake which is either above a predetermined value or below a predetermined value. It comprises routines for using said proportion as a basis for deciding whether the current mode is the most appropriate. The programme P may be stored in an executable form or in compressed form in a memory 560 and/or in a read/write memory 550.

Where the data processing unit 510 is described as performing a certain function, it means that it conducts a certain part of the programme stored in the memory 560 or a certain part of the programme stored in the read/write memory 550.

The data processing device 510 can communicate with a data port 599 via a data bus 515. The non-volatile memory 520 is intended for communication with the data processing unit 510 via a data bus 512. The separate memory 560 is intended to communicate with the data processing unit via a data bus 511. The read/write memory 550 is adapted to communicating with the data processing unit via a data bus 514. The links associated for example with the control unit 100 may be connected to the data port.

When data are received on the data port 599, they are stored temporarily in the second memory element 540. When input data received have been temporarily stored, the data processing unit 510 is prepared to conduct code execution as described above. The signals received on the data port may be used by the device 500 to determine a torque outtake pattern continually over a given period of time. The signals received on the data port may be used by the device 500 to determine the proportion of said period during which the vehicle runs with a torque outtake which is either above a predetermined value or below a predetermined value. The signals received on the data port may be used by the device 500 for using said proportion as a basis for deciding whether the current mode is the most appropriate.

Parts of the methods herein described may be conducted by the device 500 by means of the data processing unit 510 which runs the programme stored in the memory 560 or the read/write memory 550. When the device 500 runs the programme, methods herein described are executed.

A method and a system for controlling the driving of a vehicle are described above whereby change of mode is suggested to the vehicle's driver if the current mode is judged to be not the most appropriate. In an alternative variant, change of mode takes place automatically if the current mode is judged to be not the most appropriate.

The above description of the preferred embodiments of the present invention is provided for illustrative and descriptive purposes. It is not intended to be exhaustive, nor to restrict the invention to the variants described. Many modifications and variations will obviously suggest themselves to one skilled in the art. The embodiments have been chosen and described in order best to explain the principles of the invention and their practical applications and thereby make it possible for one skilled in the art to understand the invention for different embodiments and with the various modifications appropriate to the intended use.

## Claims

1. A method for controlling the driving of a vehicle, which vehicle can be run in at least one mode focused on operability and at least one mode focused on economical operation and can be switched between said modes, **characterised by** the steps of determining (S1) a torque outtake pattern continually over a given period of time (t₁ - t₂), of determining (S2) a proportion (Q) of said period during which the vehicle runs with a torque outtake which is either above a predetermined value (Mₘₐₓ) or below a predetermined value (Mₘᵢₙ), and of using said proportion as a basis for deciding (S3) whether the current mode is the most appropriate.

2. A method according to claim 1, further comprising the step of suggesting change of mode to the vehicle's driver if the current mode is judged to be not the most appropriate.

3. A method according to claim 1, further comprising the step of automatic change of mode if the current mode is judged to be not the most appropriate.

4. A method according to any one of claims 1-3, further comprising the steps of determining the vehicle's average speed continually over said given period of time, and whether said average speed is above a predetermined value.

5. A method according to any one of claims 1-4, further comprising the steps of continually determining the vehicle's current speed, and whether said current speed is above a predetermined value.

6. A method according to any one of claims 1-5, further comprising the step of continually determining whether the vehicle is running with a torque outtake which is above said predetermined value (Mₘₐₓ).

7. A method according to claim 6, in which no change of mode is suggested if said average speed is not above said predetermined value and/or said current speed is not above said predetermined value and/or the vehicle is running with a torque outtake which is above said predetermined value (Mₘₐₓ).

8. A system (I) for controlling the driving of a vehicle, which vehicle can be run in at least one mode focused on operability and at least one mode focused on economical operation and can be switched between said modes, **characterised by** means (100, 110) for determining a torque outtake pattern continually over a given period of time (t₁ - t₂), means (100, 110) for determining a proportion (Q) of said period during which the vehicle runs with a torque outtake which is either above a predetermined value (Mₘₐₓ) or below a predetermined value (Mₘᵢₙ), and means (100, 110, 130) for using said proportion as a basis for deciding whether the current mode is the most appropriate.

9. A system according to claim 8, further comprising means (100, 140) for suggesting change of mode to the vehicle's driver if the current mode is judged to be not the most appropriate.

10. A system according to claim 8, further comprising means (100, 140) for automatic change of mode if the current mode is judged to be not the most appropriate.

11. A system according to any one of claims 8-10, further comprising means (100, 120) for determining the vehicle's average speed continually over said given period of time, and means (100) for determining whether said average speed is above a predetermined value.

12. A system according to any one of claims 8-11, further comprising means (100, 120) for continually determining the vehicle's current speed, and means (100) for determining whether said current speed is above a predetermined value.

13. A system according to any one of claims 8-12, further comprising means (100, 110) for continually determining whether the vehicle is running with a torque outtake which is above said predetermined value (Mₘₐₓ).

14. A system, according to claim 13, in which no change of mode is suggested if said average speed is not above said predetermined value and/or said current speed is not above said predetermined value and/or the vehicle is running with a torque outtake which is above said predetermined value (Mₘₐₓ).

15. A vehicle provided with a system according to any one of claims 8-14.

16. A computer programme (P) for controlling the driving of a vehicle, which programme (P) comprises programme code which, when run by an electronic control unit (100) or another computer (500) connected to the electronic control unit (100), enables the electronic control unit (100) to perform steps according to claims 1-7

17. A computer readable medium product comprising a digital storage medium which stores the computer programme according to claim 16.

## Patentansprüche

1. Verfahren zum Steuern des Fahrbetriebs eines Fahrzeugs, das in wenigstens einem auf die Betriebsfähigkeit ausgerichteten Modus und wenigstens einem auf den wirtschaftlichen Betrieb ausgerichteten Modus betrieben werden kann und zwischen diesen Modi umschaltbar ist, **gekennzeichnet durch** die folgenden Schritte: kontinuierliches Bestimmen (S1) eines Drehmomentaufnahmemusters in einem gegebenen Zeitraum (t₁ -t₂), Bestimmen (S2) eines Anteils (Q) des Zeitraums, in dem das Fahrzeug mit einer Drehmomentaufnahme fährt, die entweder über einem vorbestimmten Wert (Mₘₐₓ) oder unter einem vorbestimmten Wert (Mₘᵢₙ) liegt, und unter Heranziehung dieses Anteils Entscheiden (S3), ob der aktuelle Modus der am besten geeignete ist.

2. Verfahren nach Anspruch 1, das ferner den Schritt umfasst, dem Fahrer des Fahrzeugs vorzuschlagen, den Modus zu ändern, wenn der aktuelle Modus als nicht am besten geeignet erachtet wird.

3. Verfahren nach Anspruch 1, das ferner den Schritt umfasst, den Modus automatisch zu ändern, wenn der aktuelle Modus als nicht am besten geeignet erachtet wird.

4. Verfahren nach einem der Ansprüche 1 bis 3, das ferner die folgenden Schritte umfasst: kontinuierliches Bestimmen der Durchschnittsgeschwindigkeit des Fahrzeugs in einem gegebenen Zeitraum und Bestimmen, ob die Durchschnittsgeschwindigkeit über einem vorbestimmten Wert liegt.

5. Verfahren nach einem der Ansprüche 1 bis 4, das ferner die Schritte umfasst, die aktuelle Geschwindigkeit des Fahrzeugs kontinuierlich zu bestimmen und zu bestimmen, ob die aktuelle Geschwindigkeit über einem vorbestimmten Wert liegt.

6. Verfahren nach einem der Ansprüche 1 bis 5, das ferner den Schritt umfasst, kontinuierlich zu bestimmen, ob das Fahrzeug mit einer Drehmomentaufnahme fährt, die über dem vorbestimmten Wert (Mₘₐₓ) liegt.

7. Verfahren nach Anspruch 6, bei dem keine Modusänderung vorgeschlagen wird, wenn die Durchschnittsgeschwindigkeit den vorbestimmten Wert nicht überschreitet und/oder die aktuelle Geschwindigkeit den vorbestimmten Wert nicht überschreitet und/oder das Fahrzeug mit einer Drehmomentaufnahme fährt, die über dem vorbestimmten Wert (Mₘₐₓ) liegt.

8. System (1) zum Steuern des Fahrbetriebs eines Fahrzeugs, das in wenigstens einem auf die Betriebsfähigkeit ausgerichteten Modus und wenigstens einem auf den wirtschaftlichen Betrieb ausgerichteten Modus betrieben werden kann und zwischen diesen Modi umschaltbar ist, **gekennzeichnet durch** Mittel (100, 110) zum kontinuierlichen Bestimmen eines Drehmomentaufnahmemusters in einem gegebenen Zeitraum (t₁ - t₂), Mittel (100, 110) zum Bestimmen eines Anteils (Q) des Zeitraums, in dem das Fahrzeug mit einer Drehmomentaufnahme fährt, die entweder über einem vorbestimmten Wert (Mₘₐₓ) oder unter einem vorbestimmten Wert (Mₘᵢₙ) liegt, und Mittel (100, 110, 130) zum Heranziehen des Anteils als Grundlage für die Entscheidung, ob der aktuelle Modus der am besten geeignete ist.

9. System nach Anspruch 8, das ferner Mittel (100, 140) umfasst, die dem Fahrer des Fahrzeugs vorschlagen, den Modus zu ändern, wenn der aktuelle Modus als nicht der am besten geeignete erachtet wird.

10. System nach Anspruch 8, das ferner Mittel (100, 140) umfasst, um den Modus automatisch zu ändern, wenn der aktuelle Modus als nicht der am besten geeignete erachtet wird.

11. System nach einem der Ansprüche 8 bis 10, das ferner Mittel (100, 120) zum kontinuierlichen Bestimmen der Durchschnittsgeschwindigkeit des Fahrzeugs in einem gegebenen Zeitraum und Mittel (100) zum Bestimmen, ob die Durchschnittsgeschwindigkeit über einem vorbestimmten Wert liegt, umfasst.

12. System nach einem der Ansprüche 8 bis 11, das ferner Mittel (100, 120) zum kontinuierlichen Bestimmen der aktuellen Geschwindigkeit des Fahrzeugs und Mittel (100) zum Bestimmen, ob die aktuelle Geschwindigkeit über einem vorbestimmten Wert liegt, umfasst.

13. System nach einem der Ansprüche 8 bis 12, das ferner Mittel (100, 110) zum kontinuierlichen Bestimmen, ob das Fahrzeug mit einer über dem vorbestimmten Wert (Mₘₐₓ) liegenden Drehmomentaufnahme fährt, umfasst.

14. System nach Anspruch 13, bei dem keine Modusänderung vorgeschlagen wird, wenn die Durchschnittsgeschwindigkeit den vorbestimmten Wert nicht überschreitet und/oder die aktuelle Geschwindigkeit den vorbestimmten Wert nicht überschreitet und/oder das Fahrzeug mit einer Drehmomentaufnahme fährt, die über dem vorbestimmten Wert (Mₘₐₓ) liegt.

15. Fahrzeug mit einem System nach einem der der Ansprüche 8 bis 14.

16. Computerprogramm (P) zum Steuern des Fahrbetriebs eines Fahrzeugs, wobei das Programm (P) einen Programmcode umfasst, der, wenn er von einer elektronischen Steuereinheit (100) oder einem anderen mit der elektronischen Steuereinheit (100) verbundenen Computer (500) ausgeführt wird, die elektronische Steuereinheit (100) in die Lage versetzt, Schritte nach Anspruch 1 bis 7 auszuführen.

17. Computerlesbares Medienprodukt mit einem digitalen Speichermedium, das das Computerprogramm nach Anspruch 16 speichert.

## Revendications

1. Procédé de commande de la conduite d'un véhicule, lequel véhicule peut rouler dans au moins un mode axé sur l'opérabilité et au moins un mode axé sur le fonctionnement économique et peut être commuté entre lesdits modes, **caractérisé par** les étapes de détermination (S1) d'un modèle d'absorption de couple de manière continue sur une période donnée (t₁ - t₂), de détermination (S2) d'une proportion (Q) de ladite période pendant laquelle le véhicule roule avec une absorption de couple qui est soit supérieure à une valeur prédéterminée (Mₘₐₓ) soit inférieure à une valeur prédéterminée (Mₘᵢₙ), et d'utilisation de ladite proportion comme base pour décider (S3) si le mode actuel est le plus approprié.

2. Procédé selon la revendication 1, comprenant en outre l'étape consistant à proposer un changement de mode au conducteur du véhicule s'il est jugé que le mode actuel n'est pas le plus approprié.

3. Procédé selon la revendication 1, comprenant en outre l'étape consistant à changer automatiquement de mode s'il est jugé que le mode actuel n'est pas le plus approprié.

4. Procédé selon l'une quelconque des revendications 1-3, comprenant en outre les étapes consistant à déterminer la vitesse moyenne du véhicule en continu sur ladite période donnée, et si ladite vitesse moyenne est supérieure à une valeur prédéterminée.

5. Procédé selon l'une quelconque des revendications 1-4, comprenant en outre les étapes consistant à déterminer en continu la vitesse actuelle du véhicule, et si ladite vitesse actuelle est supérieure à une valeur prédéterminée.

6. Procédé selon l'une quelconque des revendications 1-5, comprenant en outre l'étape consistant à déterminer en continu si le véhicule roule avec une absorption de couple qui est supérieure à ladite valeur prédéterminée (Mₘₐₓ).

7. Procédé selon la revendication 6, dans lequel aucun changement de mode n'est proposé si ladite vitesse moyenne n'est pas au-dessus de ladite valeur prédéterminée et/ou si ladite vitesse actuelle n'est pas au-dessus de ladite valeur prédéterminée et/ou si le véhicule roule avec une absorption de couple qui est au-dessus de ladite valeur prédéterminée (Mₘₐₓ).

8. Système (I) de commande de la conduite d'un véhicule, lequel véhicule peut rouler dans au moins un mode axé sur l'opérabilité et au moins un mode axé sur le fonctionnement économique et peut être commuté entre lesdits modes, **caractérisé par** des moyens (100, 110) pour déterminer un modèle d'absorption de couple de manière continue sur une période donnée (t₁ - t₂), des moyens (100, 110) pour déterminer une proportion (Q) de ladite période pendant laquelle le véhicule roule avec une absorption de couple qui est soit supérieure à une valeur prédéterminée (Mₘₐₓ) soit inférieure à une valeur prédéterminée (Mₘᵢₙ), et des moyens (100, 110, 130) pour utiliser ladite proportion comme base afin de décider si le mode actuel est le plus approprié.

9. Système selon la revendication 8, comprenant en outre des moyens (100, 140) pour proposer un changement de mode au conducteur du véhicule s'il est jugé que le mode actuel n'est pas le plus approprié.

10. Système selon la revendication 8, comprenant en outre des moyens (100, 140) pour changer automatiquement de mode s'il est jugé que le mode actuel n'est pas le plus approprié.

11. Système selon l'une quelconque des revendications 8-10, comprenant en outre des moyens (100, 120) pour déterminer la vitesse moyenne du véhicule en continu sur ladite période donnée, et un moyen (100) pour déterminer si ladite vitesse moyenne est supérieure à une valeur prédéterminée.

12. Système selon l'une quelconque des revendications 8-11, comprenant en outre des moyens (100, 120) pour déterminer en continu la vitesse actuelle du véhicule, et un moyen (100) pour déterminer si ladite vitesse actuelle est supérieure à une valeur prédéterminée.

13. Système selon l'une quelconque des revendications 8-12, comprenant en outre des moyens (100, 110) pour déterminer en continu si le véhicule roule avec une absorption de couple qui est supérieure à ladite valeur prédéterminée (Mₘₐₓ).

14. Système selon la revendication 13, dans lequel aucun changement de mode n'est proposé si ladite vitesse moyenne n'est pas au-dessus de ladite valeur prédéterminée et/ou si ladite vitesse actuelle n'est pas au-dessus de ladite valeur prédéterminée et/ou si le véhicule roule avec une absorption de couple qui est au-dessus de ladite valeur prédéterminée (Mₘₐₓ).

15. Véhicule muni d'un système selon l'une quelconque des revendications 8-14.

16. Programme informatique (P) de commande de la conduite d'un véhicule, lequel programme (P) comprend un code de programme qui, lorsqu'il est exécuté par une unité de commande électronique (100) ou un autre ordinateur (500) connecté à l'unité de commande électronique (100), permet à l'unité de commande électronique (100) de réaliser des étapes selon les revendications 1-7

17. Produit de support lisible par ordinateur comprenant un support de stockage numérique qui stocke le programme informatique selon la revendication 16.
